# EUROPÄISCHE PATENTSCHRIFT

(11) **EP 0 754 638 B1**
(45) Veröffentlichungstag und Bekanntmachung des Hinweises auf die Patenterteilung: **13.09.2000**
(21) Anmeldenummer: 96103629.0
(22) Anmeldetag: 08.03.1996
(51) Int. Cl.: B65H 16/06, B65H 16/02, B65H 18/04, F16C 13/02, F16C 35/06

(54) **Vorrichtung zur Halterung und Führung einer Achse oder Welle**
Device for supporting and guiding an axle or shaft
Dispositif pour supporter et guider un axe ou arbre

(30) Priorität: 15.07.1995 DE 19525893
(43) Veröffentlichungstag der Anmeldung: 22.01.1997
(73) Patentinhaber: Balzers und Leybold Deutschland Holding Aktiengesellschaft, 63450 Hanau (DE)
(72) Erfinder: Contzen, Klaus, D-61130 Nidderau (DE)

(56) Entgegenhaltungen:
- EP-A- 0 509 139
- US-A- 4 433 878

## Beschreibung

Vorrichtung zur Halterung und Führung einer Achse oder Welle oder eines Lagerrings, bestehend aus einer Lagerstütze und aus zwei mit der Lagerstütze eine Lagerbohrung bildende Halteklauen, wobei die Halteklauen an der Lagerstütze um Bolzen schwenkbar sind und die Lagerstütze mit Führungselementen versehen ist, deren einander zugekehrte Führungsflächen paarweise bis über den Bereich der Halteklauen hinausreichen und sich dabei V-förmig nach oben zu erweitern, wobei jede der beiden Halteklauen mit mindestens je einem fingerförmigen Hebel versehen ist, der jeweils auf der der Lagerstütze zugekehrten Seite des Lagerbolzens an der Halteklaue vorgesehen ist und der sich jeweils bei seitlich abgeschwenkter Halteklaue bis in den Bereich der Lagerbohrung hinein erstreckt.

Derartige Vorrichtungen sind beispielsweise bei Bandbedampfungsanlagen, in denen Folien bei hohen Umwickelgeschwindigkeiten im Vakuum über eine Bedampfungsquelle geführt und mit Al bedampft werden, erforderlich. Anwendungen hierfür sind zum Beispiel Verpackungsfolien oder Wickelkondensatoren für die Elektronik.

Die Folien sind auf einer Welle aufgewickelt und werden im Chargenbetrieb alle 1 - 2 h ausgewechselt.

Bei großtechnischen Bandbedampfungsanlagen werden Folienbreiten bis 3 m beschichtet. Die Folien sind zu einem Wickeltrum von ca. 1 m ø aufgewickelt. Die tonnenschweren Wickel werden mittels eines Hallenkranes, am Seil hängend, von oben über die geöffnete Anlage in die vorgesehene Position gefahren und in die Lageraufnahme abgesenkt. Dies erfolgt in der Regel so, daß ein Mann - auf dem Boden stehend - den Kran bedient, während ein zweiter mittels Leiter oder anderer Hilfsmittel auf die Höhe der Umwicklungseinrichtungen klettert und die Walze per Hand in die richtige Position dirigiert. Nach erfolgter Absenkung werden beide Wellenlager durch Umklappen der geöffneten oberen Lagerhälfte geschlossen und mit geeigneten Mitteln zugeschraubt. Diese Tätigkeit erfordert einiges Geschick, vor allem bei 3 m hohen Anlagen und 3 m langen Wickeltrums.

Durch die schwere Zugänglichkeit des Wickelsystems mit der Vielzahl von Führungs-, Breitstreck-, Meß- und Umlenkwalzen kann das Auswechseln der Wikkeltrums nur von erfahrenem Bedienungspersonal vorgenommen werden.

Es muß dabei auf Sauberkeit geachtet werden, d. h. die im Vakuum befindlichen Anlagenteile sollten zum Beispiel nicht durch Schuhabdrücke verunreinigt werden, da sonst die Pumpzeiten verlängert werden. Andererseits ist die Tätigkeit von einer Leiter aus kaum auszuführen, so daß ein Abstützen auf dem Wickelsystem bei großen Anlagen unvermeidbar ist.

Es ist bereits eine gattungsgemäße Vorrichtung des infragestehenden Typs bekannt (EP 0509 139 A), umfassend eine Lagerstütze und mit einer mit der Lagerstütze eine Aufnahmebohrung bildende Halteklaue, wobei die Halteklaue an der Lagerstütze um einen Bolzen schwenkbar ist und wobei die Lagerstütze mit Führungselementen versehen ist, deren einander zugekehrte Führungsflächen paarweise bis über den Bereich der Halteklaue hinausreichen und sich dabei V-förmig nach oben zu erweitern, mindestens zwei an den einander gegenüberliegenden Seiten der Lagerstütze schwenkbar angeornete Halteklauen von im wesentlichen gleicher Konfiguration vorgesehen sind, die zusammen mit der Lagerstütze die Aufnahmebohrung bilden, wobei jede der beiden Halteklauen mit mindestens je einem fingerförmigen Hebel versehen ist, der jeweils auf der der Lagerstütze zugekehrten Seite des Lagerbolzens der Halteklaue vorgesehen ist und der sich bei seitlich abgeschwenkter Halteklaue bis in den Bereich der Aufnahmebohrung hinein erstreckt.

Der vorliegenden Erfindung liegt nun die Aufgabe zugrunde, den Wechsel eines Wickeltrums weiter zu vereinfachen und die Betriebssicherheit des Lagers zu erhöhen.

Dies wird erfindungsgemäß dadurch ermöglicht, daß an die eine Halteklaue das eine Ende mindestens eines Zugglieds angelenkt ist, dessen anderes Ende mit einem Kopfteil eines Bedienhebels gelenkig verbunden ist, wobei die dem Bedienhebel abgewandte Kopffläche mit einer sich bei geschlossenen Halteklauen lotrecht nach oben erstreckenden Vorsprung oder Zunge der anderen Halteklaue korrespondiert und beim Verschwenken des Bedienhebels fest an der Zunge anliegend beide Halteklauen über das Zugglied gegeneinander zieht, wobei ein Teil der Stirnfläche der sich lotrecht erstreckenden Zunge um ein geringes Maß zurückversetzt ist.

Mit Vorteil ist der Bedienhebel motorisch bewegbar, beispielsweise über einen pneumatisch, hydraulisch oder elektrisch angetriebenen Kolben.

Zweckmäßigerweise wird die gegenseitige Verankerung der beiden Halteklauen im geschlossenen Zustand über einen elektrischen Schaltkreis überwacht, wobei die Signalrückmeldung über eine Anzeige, vorzugsweise eine Signallampe, vornehmbar ist.

Die Erfindung läßt die verschiedensten Ausführungsmöglichkeiten zu; eine davon ist in den anhängenden Zeichnungen näher dargestellt und zwar zeigen:
- Fig. 1: eine Vorrichtung zur Lagerung einer Welle mit einer Einrichtung zum selbsttätigen Öffnen und Schließen der Halteklauen beim Wechseln der Welle,
- Fig. 2: die Verriegelungseinrichtung der Vorrichtung nach Fig. 1 in vergrößerter Darstellung,
- Fig. 3: die Teildarstellung der Vorrichtung nach Fig. 1, in axialer Richtung gesehen, mit geschlossenen Halteklauen,
- Fig. 4 bis 6: verschiedene Teilschnitte durch die obere Partie der Vorrichtung gemäß Fig. 3 und zwar nach den Linien A-B, C-D und E-F.

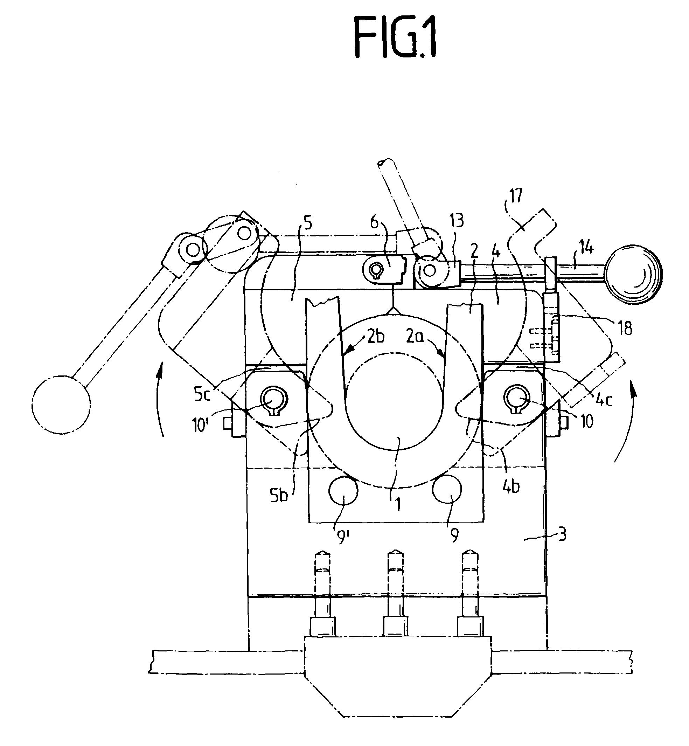

Die in Figur 1 dargestellte Vorrichtung zur Lagerung einer Welle 1 ermöglicht in einfacher Weise den Wechsel der Welle 1 als Träger, z. B. eines Wickeltrums. An den Enden der Welle 1 sind im Regelfall Wälzlager aufgesteckt, deren Außendurchmesser größer als der Wellendurchmesser ist (in Figur 1 dargestellt). Dadurch kann die Welle in einfacher Form durch den Wickel geschoben werden und mittels Klemmvorrichtungen festgestellt werden.

Beim Wechsel eines Wickeltrums wird dieser mittels einer Hebevorrichtung, z. B. einem Hallenkran, an Seilen hängend so über die Anlage gefahren, daß die Achse 1 mit dem Wälzlager auf die untere Lageraufnahme, bestehend aus der Lagerstütze 3 und den beiden Führungselementen 2, 8, abgesenkt werden kann.

Die Lagerstütze 3 ist als einteiliger Körper ausgeführt und weist vertikale Bohrungen zur Befestigung der Lagerstütze 3 auf der Unterlage auf. Die Bohrungen haben Versenkungen zur Aufnahme der Schraubenköpfe.

An der Lagerstütze 3 sind, schwenkbar um 2 Achsbolzen 10 und 10', die beiden oberen Hälften des Lagers, die Halteklauen 4 und 5 angebracht. Im geschlossenen Zustand bilden sie die obere Schale des Wälzlagers mit ihren Auflageflächen 4a und 5a. Im geöffneten Zustand geben sie den Weg für das Ausfahren der Welle 1 frei.

Die Form der beiden Halteklauen 4, 5 ist so ausgeführt, daß durch das Ausfahren der Welle 1 nach oben die Halteklauen selbständig den Weg freigeben und durch ihr Kippmoment auch geöffnet bleiben. Umgekehrt bewirkt die Formgebung der Halteklauen 4, 5 unterhalb der Achsenbolzen 10, 10' als fingerförmiger Hebel 4b, 5b, daß sich die Halteklauen selbständig schließen, wenn nämlich die Welle 1 gegen die Anschlagfläche 4b, 5b der fingerförmigen Hebel stößt.

Für die einfache Lagerung der Halteklauen 4, 5 an der Lagerstütze 3 mit dem Drehpunkt um die Achsenbolzen 10, 10' sind im Ausführungsbeispiel der Figur 1 Ausfräsungen 4c, 5c vorgesehen.

Um das automatische Einführen einer Welle beim Absenken zu erleichtern, ist auf beiden Seiten der Lagerstütze 3 jeweils ein Führungselement 2 und 8 vorgesehen. Dieses besteht aus einer Platte mit einem halbrunden Ausschnitt zur Aufnahme der Welle, der nach oben V-förmig geöffnet ist und Anschlagflächen 2a, 2b bzw. 8a, 8b aufweist.

Beide Führungselemente 2, 8 sind mit der Lagerstütze 3 über die Befestigungsschrauben 9, 9' verschraubt.

Bei dem Führungselement 2, das dem Wickeltrum zugewandt ist, sind die beiden Anschlagflächen 2a, 2b leicht nach vorne gebogen, um beim Absenken der Welle 1 auch ein Längsspiel für den Einfädelvorgang zuzulassen.

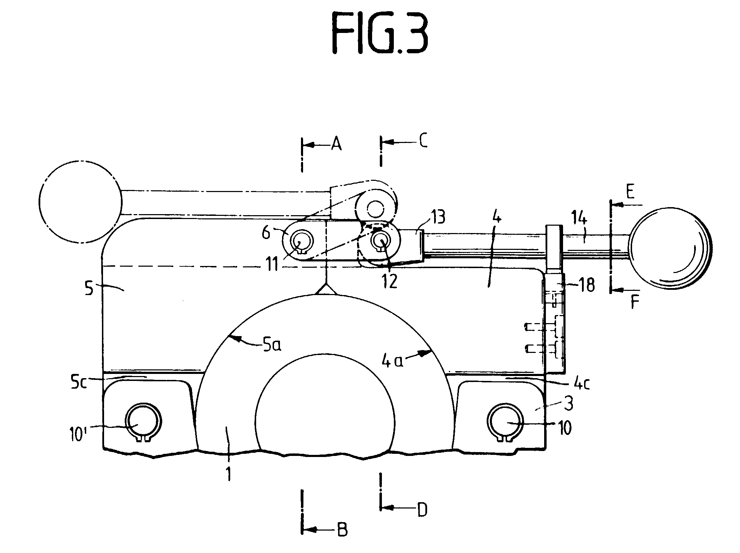

Aus Figur 1 wird deutlich, wie das selbsttätige Schließen und Öffnen funktioniert. Die Pfeile deuten den Vorgang des Schließens an. Beim Absenken der Welle stößt diese gegen die beiden Anschlagflächen 4b und 5b der beiden fingerförmigen Hebel der Halteklauen und bewirkt das Zusammenklappen bis zur Auflage der Flächen 4a und 5a auf der Welle. Dieser Zustand ist in Figur 3 dargestellt. Beim Öffnen, d. h. Herausheben der Welle, dienen die Auflageflächen 4a und 5b als Anschlagfläche für die öffnende Bewegung, bis die beiden Halteklauen 4 und 5 durch ihre Schwerkraft in die geöffnete Endstellung fallen. Diese ist durch Anschlagplatten, die an den Stützplatten angeschraubt sind, vorgegeben.

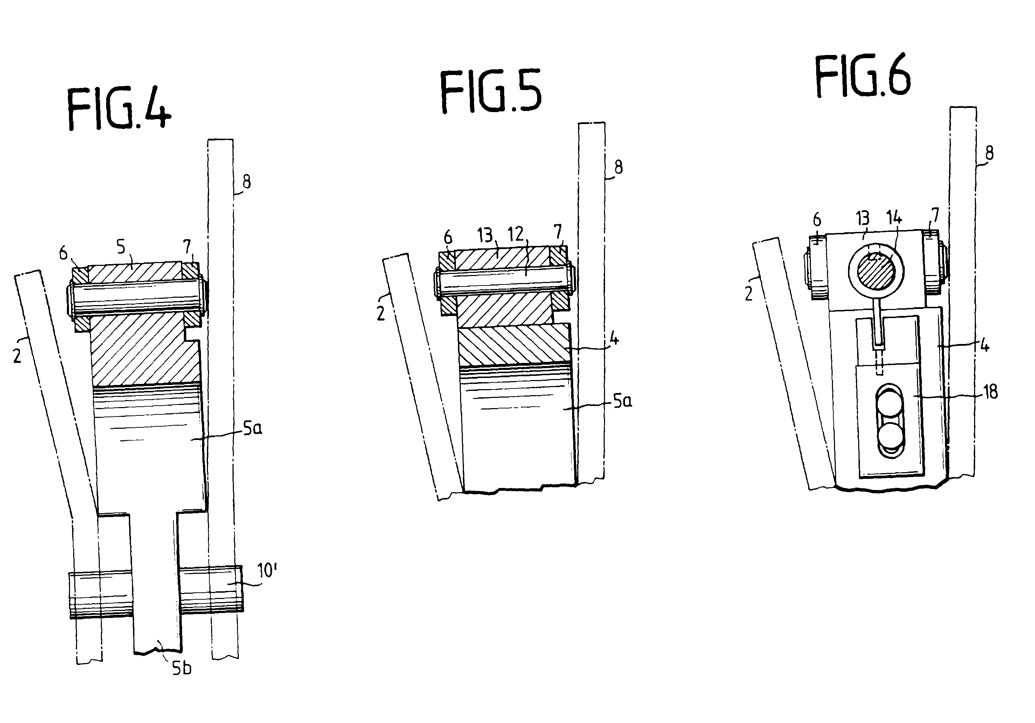

Aus den Figuren 4 bis 6 geht die Form der Führungselemente 2, 8 hervor. Die Führungselemente 2, 8 sind V-förmig ausgeschnitten und bewirken mit ihren Führungsflächen eine Zwangsführung der Welle 1 beim Absenken in die Endlage.

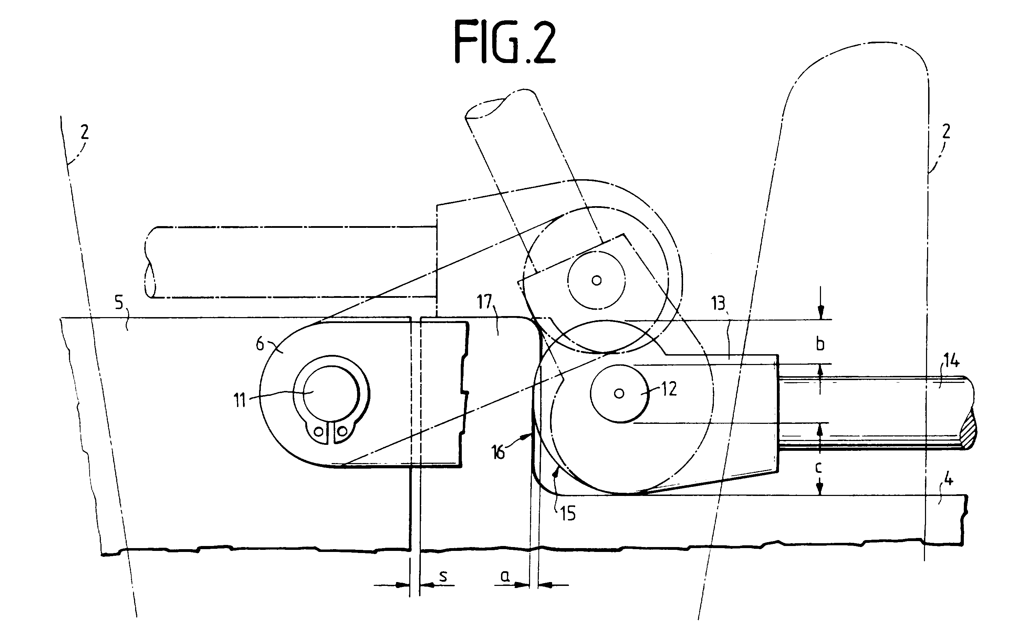

Schließlich ist in Figur 2 ein Ausführungsbeispiel für die Verriegelung der beiden Halteklauen 4, 5 im geschlossenen Zustand abgebildet.

An einer der Halteklauen 5 sind zwei Zugglieder 6, 7 gleicher Länge auf einem Bolzen 11 gelagert, wobei die freien Enden dieser beiden parallel zueinander angeordneten Zugglieder 6, 7 über einen zweiten Bolzen 12 am Kopfteil 13 eines Bedienhebels 14 angelenkt sind. Das Kopfteil 13 liegt in der Schließstellung, wie in Fig. 2 dargestellt, mit seiner Kopffläche 15 an der Stirnfläche 16 der sich lotrecht erstreckenden Zunge 17 der Halteklaue 4 an, wobei ein Teil der Stirnfläche 16 um ein geringes Maß a "hinterschnitten" bzw. zurückversetzt ist. Die Kopffläche 15 ist so ausgeformt, daß der Abstand b zwischen dem Bolzen 12 und der Kopffläche 15 im Bereich lotrecht oberhalb des Bolzens 12 in der Schließposition geringer bemessen ist, als der Abstand c zwischen dem Bolzen 12 und der Kopffläche 15 im Bereich lotrecht unterhalb des Bolzens 12, wobei die Außenkontur etwa einer logarithmischen Spirale folgt. Wie Fig. 2 zeigt, kann der Bedienhebel 14 aus der Schließposition nach links in die strichliert gezeichnete Öffnungsposition geschwenkt werden, in der die Kopffläche 15 vollständig auf der Stirnfläche 16 der Halteklaue 4 abgerollt ist und diese frei gibt. Die Abstände a und s sind so bemessen, daß das Lager ein bestimmtes Spiel aufweist, so daß sich die Welle 1 bei Temperaturänderungen geringfügig bewegen kann. Wenn der Bedienhebel sich in seiner Schließstellung befindet (Fig. 3), dann betätigt er gleichzeitig den elektrischen Schalter 18, der in den Stromkreis der Kontroll-Einrichtung eingeschaltet ist.

### Bezugszeichenliste

- 1: Welle
- 2: Führungselement
- 2a: Führungsfläche
- 2b: Führungsfläche
- 3: Lagerstütze
- 4: Halteklaue
- 4a: Auflagefläche, Halteklaue
- 4b: fingerförmiger Hebel
- 4c: Ausfräsung
- 5: Halteklaue
- 5a: Auflagefläche
- 5b: fingerförmiger Hebel
- 5c: Ausfräsung
- 6: Zugglied
- 7: Zugglied
- 8: Führungselement
- 9: Befestigungsschraube
- 9': Befestigungsschraube
- 10: Achsenbolzen
- 10': Achsenbolzen
- 11: Bolzen
- 12: Bolzen
- 13: Kopfteil
- 14: Bedienhebel
- 15: Kopffläche
- 16: Stirnfläche
- 17: Zunge
- 18: elektrischer Schalter

## Patentansprüche

1. Vorrichtung zur Halterung und Führung einer Achse oder Welle (1) oder eines Lagerrings, bestehend aus einer Lagerstütze (3) und aus zwei mit der Lagerstütze (3) eine Lagerbohrung bildenden Halteklauen (4 bzw. 5), wobei die Halteklauen (4 bzw. 5) an der Lagerstütze (3) um Bolzen (10 bzw. 10') schwenkbar sind und die Lagerstütze (3) mit Führungselementen (2,8) versehen ist, deren einander zugekehrte Führungsflächen (8a,8b bzw. 2a,2b) paarweise bis über den Bereich der Halteklauen (4 bzw. 5) hinausreichen und sich dabei V-förmig nach oben erweitern, wobei jede der beiden Halteklauen (4 bzw. 5) mit mindestens je einem fingerförmigen Hebel (4b,5b) versehen ist, der jeweils auf der der Lagerstütze zugekehrten Seite des Lagerbolzens (10,10') an der Halteklaue (4 bzw. 5) vorgesehen ist und der sich jeweils bei seitlich abgeschwenkter Halteklaue (4 bzw. 5) bis in den Bereich der Lagerbohrung hinein erstreckt, **dadurch gekennzeichnet,** daß an die eine Halteklaue (5) das eine Ende mindestens eines Zugglieds (6) angelenkt ist, dessen anderes Ende mit dem Kopfteil (13) eines Bedienhebels (14) gelenkig verbunden ist, wobei die dem Bedienhebel (14) abgewandte Kopffläche (15) mit einem sich bei geschlossenen Halteklauen (4,5) lotrecht nach oben erstreckenden Vorsprung oder Zunge (17) der anderen Halteklaue (4) korrespondiert und beim Verschwenken des Bedienhebels (14), fest an der Zunge (17) anliegend, beide Halteklauen (4,5) über das Zugglied (6) gegeneinander zieht, wobei ein Teil der Stirnfläche (16) der sich lotrecht erstreckenden Zunge (17) um ein geringes Maß (a) zurückversetzt ist.

## Claims

1. Device for holding and guiding an axle or shaft (1) or a ring bearing, the said device consisting of a bearing support (3) and two holding claws (4 and 5) which form, with the bearing support (3), a bearing bore, the holding claws (4 and 5) being pivotable about bolts (10 and 10' respectively) on the bearing support (3) and the said bearing support (3) being provided with guide elements (2, 8) whose guide faces (2a, 2b and 8a, 8b respectively) that face towards one another reach, in pairs, beyond the region of the holding claws (4 and 5) and, in doing so, widen upwards in the shape of a V, each of the two holding claws (4 and 5) being provided with at least one finger-shaped lever (4b, 5b) each, which is provided, in each case, on the holding claw (4 or 5 respectively) on that side of the bearing bolt (10, 10') that faces towards the bearing support, and which lever extends, in each case, right into the region of the bearing bore when the holding claw (4 or 5 respectively) is pivoted away laterally, **characterised in that** there is articulated on one holding claw (5), one end of at least one tension member (6) whose other end is articulatingly connected to a head part (13) on an operating lever (14), that head face (15) that faces away from the operating lever (14) corresponding with a projection or tongue (17) on the other holding claw (4), which projection or tongue extends perpendicularly upwards when the holding claws are closed, and the said head face, while resting firmly against the tongue (17), drawing the two holding claws (4, 5) towards one another via the tension member (6) when the operating lever (14) is swivelled, and part of the end face (16) of the perpendicularly extending tongue (17) being set back by a small dimension (a).

## Revendications

1. Dispositif pour la fixation et le guidage d'un axe ou d'un arbre (1) ou d'une bague de palier, consistant en un support de palier (3) et en deux mâchoires de verrouillage (4, 5) formant avec le support de palier (3) un alésage de palier, dans lequel les mâchoires de verrouillage (4, 5) reliées au support de palier (3) sont capables de pivoter autour d'axes (10, 10') et le support de palier (3) est muni d'éléments de guidage (2, 8), dont chaque paire de surfaces de guidage tournées l'une vers l'autre (8a, 8b et 2a, 2b) dépasse la zone des mâchoires de verrouillage (4, 5) et s'élargit en même temps en forme de V, dans lequel chacune des deux mâchoires de verrouillage (4, 5) est munie d'au moins un levier en forme de doigt (4b, 5b), qui est prévu sur chaque mâchoire de verrouillage (4, 5) sur le côté de l'axe de palier (10, 10') tourné vers le support de palier et qui s'étend, lorsque la mâchoire de verrouillage (4, 5) est basculée sur le côté, jusqu'à l'intérieur de la zone de l'alésage de palier, caractérisé en ce que sur l'une des mâchoires de verrouillage (5) est articulée sur une extrémité d'au moins un membre de tension (6), dont l'autre extrémité est articulée avec la tête (13) d'un levier de commande (14), de sorte que la surface de la tête (15) opposée au levier de commande (14) correspond à une partie en saillie ou languette (17) de l'autre mâchoire de verrouillage (4), qui s'étend verticalement vers le haut lorsque les mâchoires de verrouillage sont fermées, et, lorsque le levier de commande (14) est basculé de façon à reposer fermement sur la languette (17), elle tire l'une contre l'autre, par l'intermédiaire du membre de tension (6), les deux mâchoires de verrouillage (4, 5), de sorte qu'une partie de la surface frontale (16) de la languette s'étendant verticalement (17) est reculée sur une faible distance (a).
